**Europäisches Patentamt**

**European Patent Office**

**Office européen des brevets**

(19)

(11) Veröffentlichungsnummer : **0 084 037 B2**

# (12) NEUE EUROPÄISCHE PATENTSCHRIFT

(45) Veröffentlichungstag der neuen Patentschrift :
**10.04.91 Patentblatt 91/15**

(51) Int. Cl.$^5$ : **F02B 37/12**

(21) Anmeldenummer : **82902155.9**

(22) Anmeldetag : **07.07.82**

(86) Internationale Anmeldenummer :
**PCT/DE82/00140**

(87) Internationale Veröffentlichungsnummer :
**WO 83/00532 17.02.83 Gazette 83/05**

(54) **EINRICHTUNG ZUM STEUEREN DES LADEDRUCKS BEI EINER MIT AUFLADUNG BETRIEBENEN BRENNKRAFTMASCHINE.**

(30) Priorität : **28.07.81 DE 3129686**

(43) Veröffentlichungstag der Anmeldung :
**27.07.83 Patentblatt 83/30**

(45) Bekanntmachung des Hinweises auf die
Patenterteilung :
**24.06.87 Patentblatt 87/26**

(45) Bekanntmachung des Hinweises auf die
Entscheidung über den Einspruch :
**10.04.91 Patentblatt 91/15**

(84) Benannte Vertragsstaaten :
**DE FR**

(56) Entgegenhaltungen :
**EP-A- 0 040 814**
**EP-A- 0 046 872**
**DE-A- 2 637 520**
**DE-A- 2 750 265**
**DE-A- 2 835 452**
**DE-A- 2 912 974**
**DE-B- 2 738 929**
**DE-C- 2 823 255**

(56) Entgegenhaltungen :
**FR-A- 2 283 315**
**FR-A- 2 474 591**
**GB-B- 982 047**
**GB-B- 1 464 787**
**JP-A-55 029 033**
**US-A- 3 925 989**
**US-A- 3 983 851**
**US-A- 4 174 617**
**INGENIEUR DE L'AUTOMOBILE, no. 3, April 1980, PARIS (FR), "Le nouveau turbo de Saab: Auto adaption aux différents indices d'octane", Seiten 71-73**
**ATZ Automobiltechnische Zeitschrift 82 (1980)4, S. 169-177**
**MTZ Motortechnische Zeitschrift 41 (1980)5, S. 203-215**

(73) Patentinhaber : **ROBERT BOSCH GMBH**
**Postfach 50**
**W-7000 Stuttgart 1 (DE)**

(72) Erfinder : **SAUTTER, Wilfried**
**Waldstrasse 29**
**W-7257 Ditzingen 4 (DE)**
Erfinder : **WESSEL, Wolf**
**Mühlstrasse 27**
**W-7141 Oberriexingen (DE)**

EP 0 084 037 B2

## Beschreibung

### Stand der Technik

Die Erfindung geht aus von einer Einrichtung zur betriebskenngrössenabhängigen Beeinflussung des Ladedrucks einer mit Aufladung betriebenen Brennkraftmaschine.

Aus der nicht vorveröffentlichten EP-A-46 872, in der die Vertragsstaaten FR, GB, SE benannt sind, ist bereits eine derartige Einrichtung bekannt. Allerdings stellt die EP-A-46 872 auf spezielle Probleme ab, die bei der Aufladung eines mit einer Drosselklappe ausgerüsteten Otto-Motors auftreten, wobei insbesondere eine Regelung der Druckdifferenz vor und hinter der Drosselklappe vorgeschlagen wird.

Aus der JP-A-55-29 033 ist eine von der Drehzahl und der zugemessenen Kraftstoffmenge abhängige Ladedrucksteuerung mittels eines Funktionsgenerators bekannt. Ein Bypassventil wird mit den Signalen des Funktionsgenerators beaufschlagt und steuert auf der Auslassseite eines Turboladers den dort herrschenden Druck.

Die US-A-4 174 617 offenbart eine drosselklappen- bzw. lastabhängige Regelung des Ladedrucks bei einem Otto-Motor. Dieser Entgegenhaltung liegt die Aufgabe zugrunde, Druckschwankungen der Aussenluft, insbesondere in Abhängigkeit von der Höhe über dem Meeresspiegel zu kompensieren. Die DE-OS-28 23 255 zeigt eine Einrichtung, bei der in einem Kennliniengenerator 24 ein Luftmengen-Sollwertsignal abgelegt ist. Auf diesen Sollwert wird die vom Luftmengenmesser 21 erfaßte Ist-Luftmenge eingeregelt. Der Sollwert für die Luftmenge hängt dabei nur von der Drehzahl der Brennkraftmaschine ab.

In MTZ, Motortechnische Zeitschrift 41 (1980) 5, Seiten 203 bis 215 u. ATZ, Automobiltechnische Zeitung 82 (1980) 4, Seiten 169 bis 177 wird eine Steuereinrichtung für den Zündzeitpunkt bzw. die Kraftstoffmenge beschreiben. Abhängig von verschiedenen Betriebskenngrößen, dies sind z.B. Last und Drehzahl, werden Werte für den Zündzeitpunkt oder die Kraftstoffmenge aus einem Kennfeld ausgelesen. Diese Kennfeldwerte können korrigiert werden und dienen schließlich der Ansteuerung von Stellwerken. Es findet keinerlei Messung der Istwerte der Steuergrößen mit anschließender Regelung statt.

Des weiteren zeigt die DE-OS 26 37 520 eine Einrichtung zur Steuerung der Kraftstoffmenge. Mittels Raumnocken ist ein Kennfeld für die Kraftstoffmenge gegeben. Die Kraftstoffmenge wird zusätzlich abhängig von unter anderem den Betriebskenngrößen Abgas-, Lufttemperatur und Ladedruck korrigiert.

Aus der nicht vorveröffentlichten EP-A-0 040 814 in der die Vertragsstaaten De, Gb benannt sind, ist ein elektronisches Steuerungssystem eines Abgasturboladers für die Brennkraftmaschine eines Kraftfahrzeuges bekannt. Der zum Betrieb der Turbine erforderliche Abgasstrom wird mit Hilfe eines in seiner Wirkung beeinflussbaren Bypasses gesteuert. Die zur Steuerung der Offenstellung des Bypasses erforderlichen Grund-Steuersignale werden abhängig von Betriebsgrössen der Brennkraftmaschine einem in der Steuerschaltung befindlichen Speicher entnommen. Berücksichtigt werden als Betriebskenngrössen die angesaugte Luftmasse, die Gemischzusammensetzung, die Motortemperatur, der Zündwinkel und die Drehzahl. Diese Grund-Steuersignale werden bei Auftreten von Klopfen dahingehend modifiziert, dass das Klopfen verschwindet.

Mit den bekannten Einrichtungen lassen sich jedoch die Vorteile eines Turboladers, vor allem in Zuständen gravierender Laständerungen, nicht zufriedenstellend nutzen.

Der Erfindung liegt die Aufgabe zugrunde, die Vorteile der Aufladung auch im nichtstationärem Betrieb einer Brennkraftmaschine nutzbar zu machen. Gelöst wird diese Aufgabe durch die Einrichtung mit den kennzeichnenden Merkmalen des Hauptanspruches.

### Vorteile der Erfindung

Die erfindungsgemässe Einrichtung hat gegenüber dem Bekannten den Vorteil, dass neben den Betriebskenngrössen Abgas- oder Lufttemperatur und barometrischer Höhe zusätzlich noch die Beschleunigung der Brennkraftmaschine zur Beeinflussung des Ladedrucks herangezogen wird. Darüber hinaus ermöglicht die Direktmessung des Ladedruckes eine Ladedruckregelung auf einen den Betriebszustand der Brennkraftmaschine entsprechenden Sollwert.

### Zeichnung

Ausführungsbeispiele der Erfindung sind in der Zeichnung dargestellt und in der nachfolgenden Beschreibung näher erläutert. Es zeigen Figur 1 ein Kennfeld für den Ladedruck abhängig von Last und Drehzahl bei einem Ladermotor, Figur 2 ein Ausführungsbeispiel im Blockschaltbild der erfindungsgemässen Einrichtungen zum Steuern des Ladedrucks, Figur 3 und Figur 4 zwei Möglichkeiten von Bypass-Stellwerken und schliesslich Figur 5 und 6 zwei Alternativen zur luftseitigen Ladedrucksteuerung.

### Beschreibung der Ausführungsbeispiele

Die Ausführungsbeispiele betreffen Ladedrucksteuerungen bei einer Brennkraftmaschine mit Selbstzündung. Bei dieser Maschine wird der Ladedruck entsprechend einem vorgegebenen Kennfeld gesteuert und gegebenenfalls geregelt, wobei als Kennfeld-Variablen Last und Motordrehzahl, als Ausgangsgrösse Ladedruck- oder Luftdurchsätz bzw.

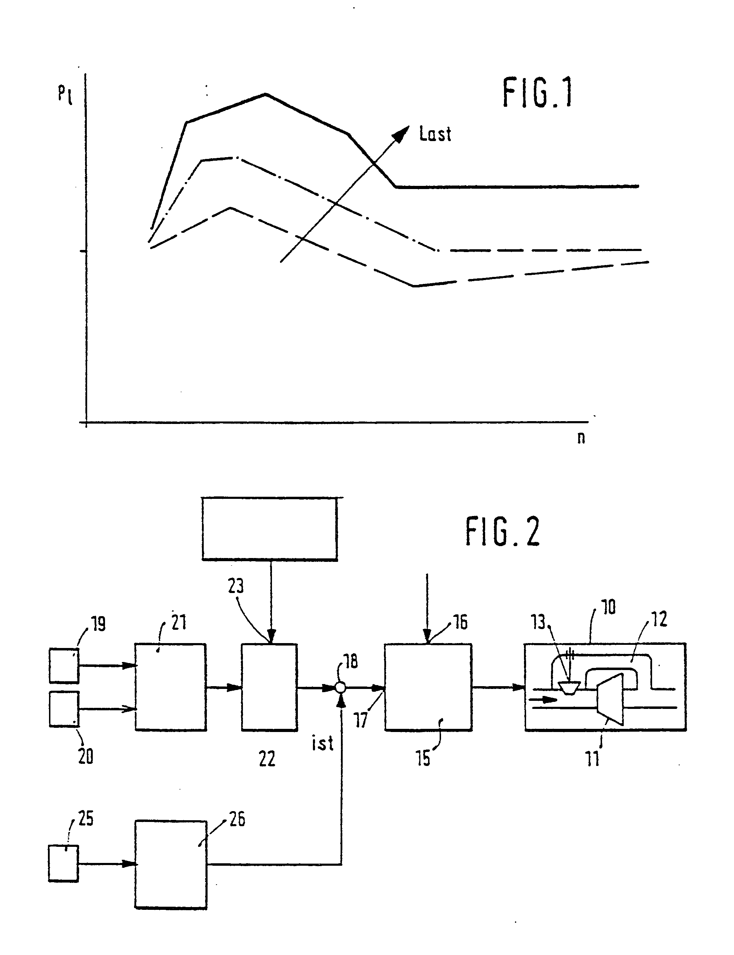

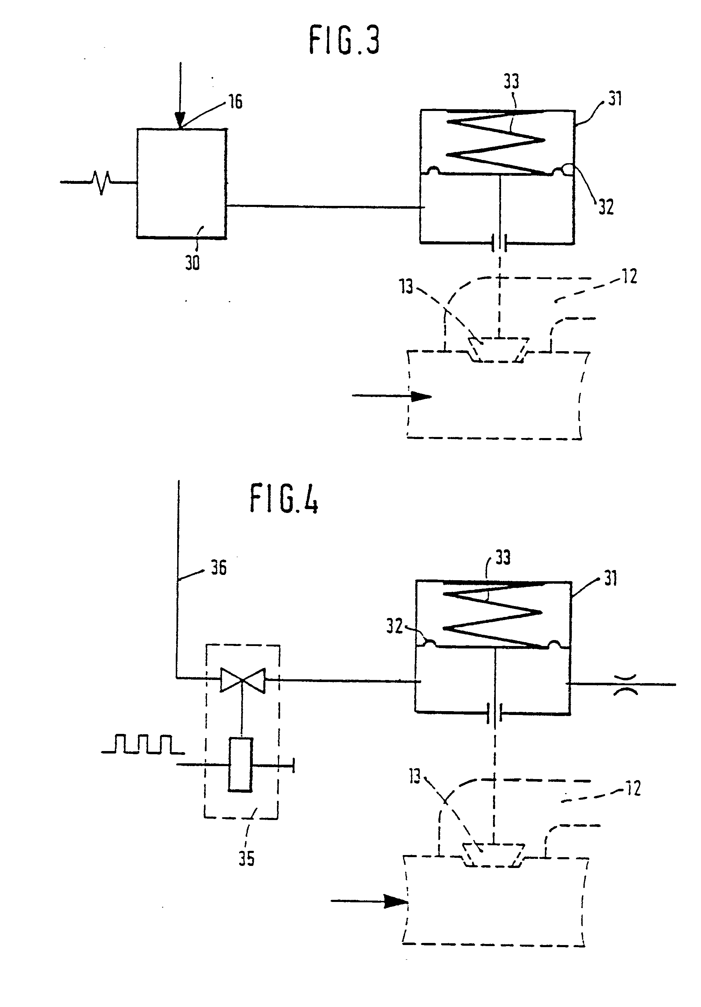

Luftmenge pro Hub dienen. Figur 1 zeigt ein derartiges Kennfeld. Erkennbar ist eine Absenkung des Ladedrucks bei höher werdender Drehzahl, was als eine deutliche Abkehr von dem Prinzip der Höchstwertbegrenzung zu werten ist. Über dieses Kennfeld lassen sich aus Versuchen ermittelte Druckwerte für jeden Betriebspunkt der Brennkraftmaschine bestimmen, wobei diese Punkte Kompromisse zwischen den unterschiedlichsten Gesichtspunkten wie Leistung, Abgaszusammensetzung, Russabgabe usw. darstellen.

Figur 2 zeigt ein Blockschaltbild eines Ladedruckreglers, bei dem der Sollwert über ein Kennfeld ermittelt wird. Die Ladereinrichtung ist mit 10 bezeichnet, und dargestellt ist in dem Blick grobschematisch eine Turbine 11 mit einem Bypasskanal 12, dessen Eintrittsöffnung mittels eines Ventils 13 steuerbar ist. Ein Regler und ein Stellwerk (mech., pneum., elektr.,) sind mit der Bezugsziffer 15 markiert, wobei bei einem speziellen Stellwerkstyp über einen Eingang 16 eine Servokraft eingespeist wird, die letztlich das Ventil 13 betätigt. Der elektrische Reglereingang trägt das Bezugszeichen 17. Ihm vorangestellt ist eine Soll-Istwertvergleichsstufe 18. Der Sollwert wird ausgehend von Last- und Drehzahlsignalen von entsprechenden Geben 19 und 20 in einem Kennfeld 21 gebildet, dem sich eine Korrekturstufe 22 anschliesst. Diese Korrekturstufe 22 besitzt einen Steuereingang 23 für Korrekturgrössen wie z.B. Signale bezüglich der atmosphärischen Höhe, der Abgastemperatur, der Lufttemperatur oder der Beschleunigung. Als Istwert gelangt zur Soll-Istwertvergleichsstufe 18 ein Drucksignal von einem Drucksensor 25, dem eine entsprechende Signalformstufe 26 nachgeschaltet ist.

Als Lastsignal von dem Lastsensor 19 sind prinzipiell alle Grössen möglich, die eine Aussage über die bei der Diesel-Brennkraftmaschine gerade eingespritzte Kraftstoffmenge ermöglichen. Erwähnt sei beispielsweise die Spritzdauer der Einspritzventile, die Regelstangenstellung sowie die Verstellhebelstellung einer Einspritzpumpe, das abgegebene Drehmoment usw.

Aus dem Kennfeld 21 wird der zu einem bestimmten Betriebszustand gehörende Ladedruck ermittelt, wobei vorzugsweise der Absolutwert des Ladedrucks abgespeichert ist. Je nach Anwendungsfall ist selbstverständlich auch die Speicherung als Über- bzw. Unterdruck möglich.

Das Kennfeld 21 selbst ist vorzugsweise elektronischer Natur. Zum Einsatz kommen beispielsweise Digitalwertspeicher (PROM). Die weitere Verarbeitung des Kennfeldwertes erfolgt ebenfalls auf elektronischem Wege, jedoch sind für einige Anwendungen sicherlich auch rein mechanische Einrichtungen z.B. mit einem Raumnocken nützlich.

Da mittels eines drei-dimensionalen Kennfelds 21 nicht alle Einflussgrössen bei einer Brennkraftmaschine berücksichtigt werden können, ist dem Kennfeld in der Darstellung von Figur 2 noch die Korrekturstufe 22 nachgeschaltet. In diesem Block werden dann die Kennfeldwerte noch manipuliert, um z.B.

    – je nach barometrischer Höhe einen anderen Ladedruck einzuregeln,

    – den Ladedruck so zu regeln, dass die Abgastemperatur einen vorgegebenen Wert nicht überschreitet,

    – bei Beschleunigung kurzzeitig einen höheren Ladedruck anzusteuern bzw. die den Turbolader beeinflussende Einrichtungen, wie Bypass oder ähnliches kurzzeitig so zu steuern, dass die höchstmögliche Beschleunigung erreicht wird.

Der so korrigierte Ladedruck-Sollwert wird dann der Soll-Istwertvergleichsstufe 18 zugeführt, an der die Regeldifferenz zu dem tatsächlich vorhandenen Ladedruck gebildet wird.

Der nachfolgende Regler 15 beeinflusst dann zusammen mit dem Stellwert den Abgas-Durchlassquerschnitt durch die Bypassöffnung in der Art und so lange, bis Soll- und Istwert übereinstimmen.

Je nach Brennkraftmaschinentyp und Anwendungsfall empfiehlt es sich, dem Regler P-, D- oder I-Verhalten anzugeben, wobei selbstverständlich auch Kombinationen möglich sind.

Figur 3 zeigt eine Realisierungsmöglichkeit eines Stellwerks zum Beeinflussen des Bypass-Ventils 13, wobei als Servodruck ein Druckmedium dient, das über einen steuerbaren Druckregler auf ein Membranstellwerk 31 einwirkt. Dabei ist eine Membran 32 des Stellwerks 31 mittels einer Feder 33 belastet und über die Einstellungen des Druckreglers 30 kann dann das Bypassventil 13 mehr oder weniger geöffnet werden. Als Druckmedium dient z.B.. Druckluft aus dem Druckluftbremssystem des Fahrzeugs (Lkw). Druckregler 30 selbst sind als solche hingänglich und in verschiedenen Variationsmöglichkeiten bekannt.

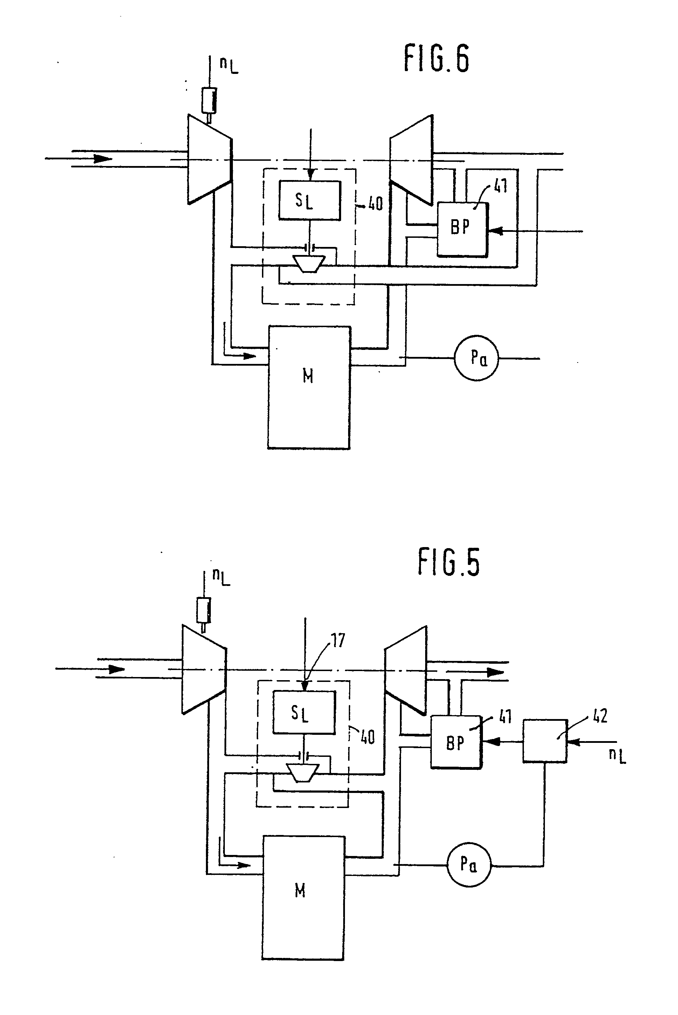

Figur 4 zeigt eine weitere Möglichkeit zur Steuerung des Bypassventils 13 mittels eines taktweise angesteuerten Magnetventils 35 in einer Druckleitung 36, die zum Druckraum des Membranstellwerks 31 führt. In diesem Fall erhält das Magnetventil 36 impulslängen-modulierte Ansteuersignale, die von der Soll-Istwertweichung abhängen und deren Erzeugung für einen Fachmann auf dem betreffenden Gebiet kein Problem darstellt.

Bei der beschriebenen Steuerung des Ladedrucks bzw. des Luftdurchsatzes gemäss vorgegebenen Kemfeldern durch Beeinflussung des wirksamen Abgasdurchflussquerschnittes an der Turbine ergibt sich, dass bei Verringerung des Ladedrucks gegenüber unbeeinflusster Turbine eine Minderung der Turboladerdrehzahl resultiert. Bei plötzlichem Gasgeben muss demnach der Turbolader erst beschleunigt werden und Ladedruck aufgebaut werden, um einen Rauchstoss zu vermeiden.

Es ist vorteilhaft, den Turbolader immer auf möglichst hoher Drehzahl zu halten, um bei Bedarf (Beschleunigung) möglichst schnell Ladedruck und damit erhöhte Luftfüllung des Zylinders zu erhalten.

Dies kann dadurch erreicht werden, dass nicht wie oben beschrieben der Abgasquerschnitt beeinflusst wird, sondern Luft aus dem Saugrohr abgeblasen wird.

Dies ist in den Figuren 5 und 6 dargestellt.

Das Stellwerk 40 wird entsprechend dem Ladedruck- (oder Luftdurchsatz-)Kennfeld so angesteuert, dass überschüssige Luft abgeblasen wird und sich der gewünschte Ladedruck einstellt. Beim Gegenstand von Fig. 5 wird die abgeblasene Luft vor der Turbine wieder dem Abgasstrom hinzugefügt.

Da jetzt auf der Verdichterseite aufgrund der begrenzten Drucks weniger Arbeit geleistet werden muss steigt die Ladedrehzahl. Es kann als Schutz gegen Turboladerbeschädigung erforderlich sein, die Drehzahl des Turboladers zu begrenzen, indem wiederum ein Teil des Gasstroms im Bypass 41 an der Turbine vorbeigeführt wird. Für die Ansteuerung des Bypass 41 wird deshalb vorzugsweise die Laderdrehzahl $n_2$ in einem Regler 42 verarbeitet. Eine zu hohe Laderdrehzahl öffnet den Bypass und begrenzt damit die Laderdrehzahl auf ein ungefährliches Mass (P- oder PI-Regler). Ersatzweise für die Laderdrehzahl kann zur Ansteuerung des Bypasses 41 auch der Abgasgegendruck Pa verwendet werden in der Art, dass zu hoher Abgasgegendruck den Bypass 41 (oder einen sonstigen den Durchflussquerschnitt der Turbine bestimmenden Mechanismus wie z.B. "variable flow turbine") öffnet und so den Gegendruck begrenzt.

Selbstverständlich können die einzelnen Stellwerke 40, 41 durch Korrekturgrössen beeinflusst werden ; insbesondere sollen bei Beschleunigung die einzelnen Stellwerke geschlossen oder stark gedrosselt werden können.

Figur 6 zeigt eine ebenfalls mögliche Anordnung, bei der die abgeblasene Luft nach der Turbine eingeführt wird, ansonsten aber die gleichen Steuermechanismen gelten.

Die Anordnung nach Figur 6 hat den Vorteil, dass die Abgastemperatur am Turbineneingang weniger schwankt als bei der nach Figur 5 und ausserdem ein grösserer Regelbereich (bis zu Saugrohrdruck = Atmosphärendruck) möglich ist. Je nach Auslegung ist jedoch eine geringere Turboladerdrehzahl in Kauf zu nehmen.

Vorteilhaft bei der Luftabblasesteuerung (-regelung) gegenüber der Abgas-Bypass-Lösung von Figur 2 bis 4 ist, dass der Turbolader auf hoher Drehzahl gehalten wird und somit bei Lastwechsel/Beschleunigung schnell hoher Ladedruck verfügbar ist.

Wesentlich an allen vorstehend beschriebenen Ausführungsbeispielen ist, dass eine last- und drehzahl-abhängige freie Vorgabe des Ladedrucks mit beliebiger steigender, fallender oder konstanter Charakteristik eine Senkung der Schadstoffemissionen, insbesondere bei höherer Motordrehzahl (etwa ab der halben Motor-Nenndrehzahl) ermöglicht. Die Vorgabe des jeweils einzustellenden Ladedrucks erfolgt dabei in einem Kennfeld. Damit erhält man für jeden Betriebspunkt der Maschine optimale Bedingungen für sparsamen und emissionsarmen Betrieb. Gleichzeitig wird die Belastung der Brennkraftmaschine aufgrund der Absenkung des Verbrennungsspitzendrucks bei hohen Drehzahlen vermindert.

## Ansprüche

1. Einrichtung zur betriebskenngrössenabhängigen Beeinflussung des Ladedrucks einer mit Aufladung betriebenen Brennkraftmaschine durch die Verwendung einer Kennfeldspeicheranordnung, in welcher Betriebssollwerte zur Festlegung des Ladedruckes eingespeichert sind, mit nut einem Kennfeldspeicher (21), in dem die Betriebssollwerte last- und drehzahlabhängig eingespeichert sind, wobei diese Betriebssollwerte durch Korrekturgrössen betriebskenngrössenabhängig korrigierbar sind, dadurch gekennzeichnet, dass als betriebskenngrössen die Grössen Beschleunigung der Brennkraftmaschine, Abgas- oder Lufttemperatur und barometrische Höhe herangezogen werden, und dass der mit einem Sensor direkt gemessene Ladedruckistwert auf einstellbare Ladedrucksollwerte regelbar ist.

2. Einrichtung nach Anspruch 1, dadurch gekennzeichnet, dass die Beeinflussung des Ladedrucks mittels eines federbelasteten Membranstellwerks (31) in einem Bypasskanal (12) erfolgt.

3. Einrichtung nach Anspruch 2, dadurch gekennzeichnet, dass das Membranstellwerk (31) mittels eines Druckmediums über einen Druckregler (30) oder ein elektromagnetisch ansteuerbares Ventil (35) betätigt wird.

4. Einrichtung nach wenigstens einem der vorhergehenden Ansprüche, dadurch gekennzeichnet, dass der wirksame Querschnitt des Ventils (13) mittels Elektromotor und Gestänge, Schrittmotor, LinearHubmagnet oder hydraulischem Steller gesteuert wird.

5. Einrichtung nach wenigstens einem der vorhergehenden Ansprüche, dadurch gekennzeichnet, dass eine steuerbare Verbindung von der Ladedruckseite der Brennkraftmaschine zur Abgasleitung stromaufwärts oder stromabwärts der Turbine (11) vorgesehen ist.

6. Einrichtung nach wenigstens Anspruch 1 bis 5, dadurch gekennzeichnet, dass ein betriebskenngrössenabhängig gesteuerter Bypasskanal (12) die Turbine (11) überbrückt.

7. Einrichtung nach Anspruch 1, dadurch gekennzeichnet, dass als weitere Betriebskenngrösse wenigstens eine der Grössen Laderdrehzahl und Abgasdruck herangezogen wird.

## Claims

1. Device for influencing the charging pressure of an internal combustion engine operated with supercharge, dependent on operating characteristics, by the use of a characteristic diagram memory arrangement, in which operating set values for determining the charging pressure are stored, with only one characteristic diagram memory (21), in which the operating set values are entered load- and speed-dependently, these operating set values being correctable dependent on the operating characteristics by correction variables, characterized in that the variables used as operating characteristics are acceleration of the internal combustion engine, exhaust or air temperature and barometric level, and in that the charging pressure actual value measured directly with a sensor can be regulated to adjustable charging pressure set values.

2. Device according to Claim 1, characterized in that the influencing of the charging pressure takes place by means of a spring-loaded diaphragm controlling unit (31) in a bypass channel (12).

3. Device according to Claim 2, characterized in that the diaphragm controlling unit (31) is actuated by means of a pressure medium via a pressure controller (30) or an electromagnetically operable valve (35).

4. Device according to at least one of the preceding claims, characterized in that the effective cross-section of the valve (13) is controlled by means of electric motor and linkage, stepping motor, linear solenoid actuator or hydraulic positioner.

5. Device according to at least one of the preceding claims, characterized in that a controllable connection is provided from the charging pressure side of the internal combustion engine to the exhaust pipe upstream or downstream of the turbine (11).

6. Device according to at least Claims 1 to 5, characterized in that a bypass channel (12) controlled dependent on operating characteristics bridges the turbine (11).

7. Device according to Claim 1, characterized in that at least one of the variables used as a further operating characteristic is supercharger speed and exhaust pressure.

## Revendications

1. Dispositif pour influencer, en relation avec des grandeurs caractéristiques de fonctionnement, la pression d'alimentation d'un moteur à combustion interne suralimenté par l'utilisation d'un dispositif de mémoire à champ caractéristique qui contient en mémoire des grandeurs de consigne de fonctionnement déterminant la pression d'alimentation, avec dans une seule mémoire de champ caractéristique (21) qui contient les grandeurs de consigne de fonctionnement suivant la charge et la vitesse de rotation, ces grandeurs de consigne de fonctionnement pour être corrigées par des grandeurs de correction dépendant de grandeurs caractéristiques de fonctionnement, dispositif caractérisé en ce que comme grandeurs caractéristiques de fonctionnement, on utilise les grandeurs : accélération du moteur à combustion interne, température des gaz d'échappement et de l'air et hauteur barométrique et en ce que la valeur réelle de la pression d'alimentation mesurée directement par un capteur est susceptible d'être réglée sur des valeurs de consigne réglables de la pression d'alimentation.

2. Dispositif selon la revendication 1, caractérisé en ce que la pression d'alimentation est influencée à l'aide d'un dispositif de réglage à membrane (31) chargé par ressort dans un canal de dérivation (12).

3. Dispositif selon la revendication 2, caractérisé en ce que le dispositif de réglage à membrane (31) est actionné par l'intermédiaire d'un fluide sous pression en passant par un régulateur de pression (30) ou une soupape (35) à commande électromagnétique.

4. Dispositif selon au moins l'une des revendications précédentes, caractérisé en ce que la section efficace de la soupape (13) est commandée à l'aide d'un moteur électrique et d'une tringlerie, d'un moteur pas-à-pas, d'un électro-aimant linéaire ou d'un dispositif de réglage hydraulique.

5. Dispositif selon au moins l'une des revendications précédentes, caractérisé en ce qu'il est prévu une liaison commandée entre le côté de la pression de remplissage du moteur à combustion interne et la conduite de gaz d'échappement en amont ou en aval de la turbine (11).

6. Dispositif selon au moins l'une des revendications 1 à 5, caractérisé en ce qu'il est prévu un canal de dérivation (12) commandé, en fonction de grandeurs caractéristiques de fonctionnement, qui shunte la turbine (11).

7. Dispositif selon la revendication 1, caractérisé en ce que, comme autres grandeurs caractéristiques de fonctionnement, on utilise au moins l'une des grandeurs : vitesse de rotation du turbocompresseur et pression des gaz d'échappement.

FIG.1

FIG.2

# FIG.3

# FIG.4

# FIG.6

# FIG.5